# EUROPÄISCHE PATENTSCHRIFT

(11) **EP 2 638 618 B1**
(45) Veröffentlichungstag und Bekanntmachung des Hinweises auf die Patenterteilung: **17.12.2014**
(21) Anmeldenummer: 11782408.6
(22) Anmeldetag: 07.11.2011
(51) Int. Cl.: H02K 1/14, H02K 21/24, B62M 6/55

(54) **ELEKTRISCHER SCHEIBENLÄUFERMOTOR UND ELEKTROFAHRRAD ODER PEDELEC MIT SCHEIBENLÄUFERMOTOR**
ELECTRIC DISK ROTOR MOTOR AND ELECTRIC BICYCLE OR PEDELEC COMPRISING A DISK ROTOR MOTOR
MOTEUR ÉLECTRIQUE À ENTREFER PLAN ET VÉLO ÉLECTRIQUE OU VÉLO À ASSISTANCE ÉLECTRIQUE ÉQUIPÉ D'UN MOTEUR ÉLECTRIQUE À ENTREFER PLAN

(30) Priorität: 10.11.2010 DE 102010060482
(43) Veröffentlichungstag der Anmeldung: 18.09.2013
(73) Patentinhaber: BINOVA GmbH, 01768 Glashütte Schlottwitz (DE)
(72) Erfinder: BECKER, Christian, 68167 Mannheim (DE)
(74) Vertreter: Meissner, Bolte & Partner GbR
(86) Internationale Anmeldenummer: PCT/EP2011/069560
(87) Internationale Veröffentlichungsnummer: WO 2012/062710

(56) Entgegenhaltungen:
- EP-A1- 1 542 343
- EP-A2- 1 746 705
- WO-A1-2004/017497
- WO-A1-2004/073143
- WO-A2-2010/070405
- DE-A1- 19 522 419
- GB-A- 2 360 140
- US-A- 4 761 590
- US-A- 5 216 339

## Beschreibung

Die Erfindung betrifft einen elektrischen Scheibenläufermotor gemäß dem Oberbegriff des Anspruchs 1 und ein Elektrofahrrad oder Pedelec mit einem Scheibenläufermotor gemäß der Erfindung.

Bei einem Scheibenläufermotor haben Rotor und Stator eine Scheibenform. Eine Scheibe ist im Vergleich zu ihrer ebenen Erstreckung dünn ausgebildet. Die Rotor- und Statorscheiben des Scheibenläufermotors sind parallel zueinander und senkrecht zur Drehachse des Motors entlang dieser Drehachse angeordnet. Dies führt dazu, dass Scheibenläufermotoren eine Bauform aufweisen, die sich deutlich von der Bauform anderer Elektromotoren unterscheidet. Ihr Durchmesser senkrecht zur Drehachse ist größer als ihre axiale Länge, in der Regel um ein Vielfaches größer.

Aus WO 2004/073143 A1 und US 4 761 590 A sind Elektromotoren mit Spulenelementen bekannt. WO 2004/017497 A1 beschreibt einen Generator für den Einsatz bei Windkraftanlagen oder Wasserkrafträdern. Als weiteren Stand der Technik wird auf DE 195 22 419 A1, US 5 216 339 A, GB 2 360 140 A, WO 2010/070405 A2, EP 1 542 343 A1 und EP 1 746 705 A2 verwiesen.

Die der Erfindung zugrunde liegenden Scheibenläufermotoren für Elektrofahrräder oder Pedelecs weisen mindestens einen als Scheibe ausgebildeten Stator und mindestens einen als Läuferscheibe ausgebildeten Rotor, der gegenüber dem Stator und/oder einem Motorgehäuse um eine Drehachse drehbar gelagert ist, auf. Rotor (Rotorscheibe) und Stator (Statorscheibe) sind parallel zueinander orientiert und durch einen Spalt voneinander beabstandet. Eine dem Stator (der Statorscheibe) zugewandte Stirnseite des Rotors weist eine Vielzahl an in axialer Richtung gepolten Permanentmagneten auf, die ringförmig um die Drehachse angeordnet sind, wobei in tangentialer Richtung abwechselnd ein Nord- und ein Südpol dem Stator zugewandt ist. Der Stator weist eine Vielzahl an Spulenelementen auf, die ringförmig um die Drehachse des Rotors angeordnet sind.

Weiterhin ist vorgesehen, dass der mindestens eine Stator zwischen zwei Rotoren angeordnet ist, die um eine gemeinsame Drehachse drehbar gelagert sind. Somit weist der Scheibenläufermotor mindestens zwei der bereits beschriebenen Rotoren und damit zwei Rotorscheiben auf, die beiderseits der Statorscheibe angeordnet sind.

Auch ist vorgesehen, dass die Spulenelemente derart angeordnet sind, dass ihre jeweilige Spulenachse tangential um die gemeinsame Drehachse der Rotoren ausgerichtet ist. Vorzugsweise wirken beide Rotoren zusammen und stellen gemeinsam das Ausgangsdrehmoment des Motors an dessen Ausgangsachse bereit.

Weiter sieht die Erfindung vor, dass die Spulenelemente jeweils einen Spulenträger aufweisen mit einem Spulenkern, um den ein Spulendraht gewickelt ist, wobei der Spulenkern an seinen entlang der Spulenachse gegenüberliegenden Enden zwei einander gegenüberliegende Polkörper aufweist, die sich in axialer und/oder in radialer Richtung bezogen auf die Drehachse des Rotors beidseitig über den Spulenkern hinausgehend erstrecken. Somit ist der Spulendraht durch die Polkörper am Spulenkern fixiert, er kann aufgrund der vorstehenden Polkörper nicht vom Spulenkern rutschen. Im Querschnitt weist der Spulenträger somit im Wesentlichen die Form eines H auf. Das Spulenelement weist eine konzentrierte Spulenwicklung auf. Durch den Spulenträger wird das Spulenelement zur kompakten Baueinheit, was eine einfache Herstellung des Stators ermöglicht. Die einander gegenüberliegenden Polkörper eines Spulenelements weisen immer eine entgegengesetzte Polung auf, da sie den gegenüberliegenden Spulenenden zugeordnet sind.

Schließlich ist vorgesehen, dass beide Polkörper jedes Spulenelements jeweils an beiden den Rotoren zugewandten, einander gegenüberliegenden Stirnseiten des Stators den Permanentmagneten des jeweiligen Rotors zumindest abschnittsweise gegenüberliegende Polflächen ausbilden. Somit erstreckt sich jeder Polkörper axial durch den Stator hindurch, er bildet an beiden Statorseiten eine Polfläche mit gleicher Polung aus. Jeder Pol des Spulenelements wird dadurch zweifach genutzt, nämlich zur Wechselwirkung mit jedem der beiden an den Stator angrenzenden Rotoren.

Bei bekannten Bauformen sind die Spulenachsen der Spulenelemente axial bezogen auf die Drehachse des Rotors ausgerichtet. Das Spulenelement ist somit wie die Permanentmagneten des Rotors in axialer Richtung gepolt, wobei die konkrete Polung von der Richtung des Stromflusses durch die Spulendrähte abhängt. Dementsprechend wirken die Pole der Spulenelemente mit den Permanentmagneten des Rotors zusammen.

Nachteilig hierbei ist, dass jedes Spulenelement immer nur über einen Pol und damit eine Polfläche mit einem Rotor zusammenwirkt. Bei den Spulenelementen handelt es sich in der Regel um Flachspulen mit vergleichsweise großem Querschnitt, so dass entsprechend auch die Pole vergleichsweise große Polflächen ausbilden. Dies führt dazu, dass Scheibenläufermotoren einen vergleichsweise großen Querschnitt benötigen, um ein gewünschtes Drehmoment bereitstellen zu können.

Der Erfindung liegt die Aufgabe zugrunde, einen verbesserten Scheibenläufermotor anzugeben. Insbesondere soll ein Scheibenläufermotor mit im Vergleich zu vorbekannten Scheibenläufermotoren höherer Poldichte und damit höherem möglichen Drehmoment bei gleichem Durchmesser angegeben werden. Vorzugsweise soll der Scheibenläufermotor ein gewünschtes Drehmoment bei deutlich kompakteren Abmessungen als beim Stand der Technik bereitstellen können. Ferner soll ein verbessertes Elektrofahrrad oder Pedelec mit einem derartigen Scheibenläufermotor angegeben werden.

Diese Aufgabe wird hinsichtlich des Scheibenläufermotors gelöst durch die Merkmale des Anspruchs 1 und hinsichtlich des Elektrofahrrads oder Pedelecs durch der Merkmale des Anspruchs 8. Vorteilhafte Ausgestaltungen und Weiterbildungen sind in den abhängigen Ansprüchen angegeben.

Der erfindungsgemäße Scheibenläufermotor ist dadurch gekennzeichnet, dass die Polkörper bezogen auf die Drehachse des Rotors radial ausgerichtet sind, so dass sich der Abstand der beiden Polkörper eines Spulenelements mit zunehmendem radialen Abstand von der Drehachse des Rotors vergrößert. Dadurch wird eine gleichmäßige Zusammenwirkung der Polflächen mit den Permanentmagneten des oder der Rotoren sichergestellt, was insbesondere bei großer radialer Erstreckung der Polflächen wichtig ist. Anders betrachtet, ermöglicht diese Ausbildung der Polkörper die Bereitstellung von Polflächen mit vergleichsweise großer radialer Erstreckung, was bei entsprechender Ausbildung der Permanentmagnete der Rotoren zu einer Steigerung der Leistung des Scheibenläufermotors bei weiterhin kompakten Abmessungen führt.

Der erfindungsgemäße Scheibenläufermotor ist ferner dadurch gekennzeichnet, dass der Spulenkern ein Flachkörper ist, dessen radiale Erstreckung bezogen auf die Drehachse des Rotors seine axiale Erstreckung um ein Vielfaches übersteigt. Dies ermöglicht axial kompakte Statoren und damit entsprechend kompakte Scheibenläufermotoren. Gleichzeitig führt insbesondere eine vergleichsweise große radiale Erstreckung des Spulenkerns und damit des Spulenelements zu einer entsprechend großen radialen Erstreckung des Polkörpers und damit der Polflächen, was ebenfalls leistungsstarke kompakte Motoren ermöglicht.

Unter Spulenelement wird ein magnetisch isoliertes Einzelelement mit eigenständiger Spule, beispielsweise einer Drahtwicklung, verstanden, d.h. die Spule eines Spulenelements ist individuell elektrisch ansteuerbar zur Erzeugung eines individuellen Magnetfelds des Spulenelements. Insbesondere ist eine individuelle Ansteuerung des Spulenelements unabhängig von benachbarten Spulenelementen möglich. Ferner sind die Spulenträger benachbarter Spulenelemente zweckmäßigerweise zueinander beabstandete Bauelemente, insbesondere durch eine Kunststoffschicht voneinander getrennte und/oder in eine Kunststoffmasse eingegossene Bauelemente.

Die weiteren Vorteile der Erfindung liegen insbesondere darin, dass bei dem erfindungsgemäßen Scheibenläufermotor die Anzahl der Pole, die mit einem Rotor und dessen Permanentmagneten zusammenwirken, gegenüber einem Scheibenläuferrotor bekannter Bauart mit axialer Spulenachse verdoppelt ist. Aufgrund der tangentialen Ausrichtung der Spulenachse verlaufen die Magnetfeldlinien innerhalb der Spule ebenfalls tangential. Beim Austritt aus der Spule an beiden Enden verlaufen Feldlinien auch zu den Seiten und damit auch zu den dem Stator zugeordneten Rotoren. Somit bilden sowohl der Nord- als auch der Südpol jeder Spule und damit jedes Spulenelements einen Pol, der mit den Permanentmagneten der zugeordneten Rotoren zusammenwirkt. Jedes Spulenelement bildet somit in Richtung auf beide benachbarten Rotoren jeweils sowohl einen Nord- als auch einen Südpol aus. Bei axialer Ausrichtung der Spulenachse hingegen wirkt nur der Nord- oder der Südpol eines Spulenelements mit den Permanentmagneten eines zugeordneten Rotors zusammen.

Von Vorteil ist ferner, dass gemäß der Erfindung die parallel zur Spulenachse liegende Spulenseite der Spulenelemente und nicht die Spulenenden entlang der Spulenachse dem oder den Rotoren zugewandt sind. Diese Spulenseiten weisen geringere Abmessungen auf als die Spulenenden bekannter Scheibenläufermotoren.

Der Stator des erfindungsgemäßen Scheibenläufermotors weist pro benachbartem Rotor ein Verhältnis "Polzahl zu Spule" von 2 zu 1 auf, je benachbartem Rotor sind pro Spule und damit pro Spulenelement zwei Pole wirksam.

Sowohl die Verdoppelung der wirksamen Polzahl im Vergleich zu Scheibenläufermotoren mit axial ausgerichteten Spulenelementen als auch die flächenmäβigen Vorteile der Spulenausrichtung ermöglichen eine deutlich größere Poldichte bei den erfindungsgemäßen Scheibenläufermotoren im Vergleich zu bekannten Scheibenläufermotoren. Dies wiederum führt zu einem deutlich größeren Drehmoment, das ein erfindungsgemäßer Scheibenläufermotor im Vergleich zu einem bekannten Scheibenläufermotor mit vergleichbaren Außenabmessungen bereitstellen kann.

Die bei der erfindungsgemäßen Lösung vorgesehenen beiden Polflächen jedes Polkörpers sind einander gegenüberliegend an den Stirnseiten des Stators ausgebildet. Jedes Polflächenpaar weist zwangsläufig eine einheitliche magnetische Polung auf, d.h. beide Polflächen eines Polkörpers bilden entweder einen Nordpol oder einen Südpol. Dementsprechend sind auch die diesen Polflächen jeweils gegenüberliegenden Permanentmagneten beider Rotoren magnetisch gleich gepolt, d.h. die axial einander zugewandten Permanentmagnetpole der beiden den Stator einschließenden Rotoren sind magnetisch gleich gepolt, es handelt sich entweder um zwei Südpole oder um zwei Nordpole. Mit anderen Worten: Die beiden Rotoren sind derart zueinander orientiert, dass ein dem anderen Rotor zugewandter Permanentmagnetpol des einen Rotors einem magnetisch gleichpoligen Permanentmagnetpol des anderen Rotors zugewandt ist, d.h. ein Nordpol des einen Rotors ist einem Nordpol des anderen Rotors zugewandt und ein Südpol des einen Rotors ist einem Südpol des anderen Rotors zugewandt. Dies führt dazu, dass zwei gleichpolige Permanentmagnetpole der beiden Rotoren über die beiden Polflächen eines Polkörpers mit dem dazugehörigen Spulenelement zusammenwirken, und dies sowohl an der Nordpolals auch an der Südpolseite des Spulenelements, jeweils mit entgegengesetzten magnetischen Polungen. Dies führt zu einer Verdoppelung des magnetischen Flusses im Spulenkern im Vergleich zu Stator-Rotor-Anordnungen mit axialer Ausrichtung der Spulenachsen.

Vorzugsweise handelt es sich bei dem erfindungsgemäßen Scheibenläufermotor um einen Gleichstrommotor und/oder um einen bürstenlosen Scheibenläufermotor.

Vorzugsweise erstrecken sich die Polkörper beiderseits der Statorscheibe bis zur Oberfläche des Stators, dort bilden Sie Polflächen, die in der Statoroberfläche liegen, aus. Diese liegen den an der Oberfläche der Rotoren angeordneten und dort vorzugsweise ebenfalls flächig ausgebildeten Polen der Permanentmagnete gegenüber und wirken mit diesen zusammen.

Eine Ausführungsvariante der Erfindung sieht vor, dass die Polflächen an einer bezogen auf die Drehachse des Rotors tangentialen Verbreiterung des Polkörpers ausgebildet sind, insbesondere an einer Verbreiterung in Richtung auf den jeweils anderen Polkörper desselben Spulenelements. Damit wird die Fläche des Stators, die magnetisch mit den Permanentmagneten des oder der Rotoren wechselwirkt, vergrößert. Auch Oberflächenbereiche des Stators, die den Spulendraht und den Spulenkern überdecken, stehen dadurch als Polflächen zur Verfügung. Auch hierdurch wird die Leistungsfähigkeit des Scheibenläufermotors verbessert bzw. es werden kompaktere Abmessungen des Motors bei gleichbleibender Leistung ermöglicht.

Eine Weiterbildung der Erfindung sieht vor, dass die Polkörper bezogen auf die Drehachse des Rotors radial ausgerichtet sind, so dass sich die tangentiale Erstreckung des Spulenelements mit zunehmendem radialem Abstand von der Drehachse des Rotors vergrößert. Dadurch wird eine gleichmäßige Zusammenwirkung der Polflächen mit den Permanentmagneten des oder der Rotoren sichergestellt, was insbesondere bei großer radialer Erstreckung der Polflächen wichtig ist. Anders betrachtet, ermöglicht diese Ausbildung der Polkörper die Bereitstellung von Polflächen mit vergleichsweise großer radialer Erstreckung, was bei entsprechender Ausbildung der Permanentmagnete der Rotoren zu einer Steigerung der Leistung des Scheibenläufermotors bei weiterhin kompakten Abmessungen führt.

Zu einer hohen Leistung bei kompakten Abmessungen trägt auch eine Weiterbildung bei, bei der der Spulenkern ein Flachkörper ist, dessen tangentiale Erstreckung bezogen auf die Drehachse des Rotors seine axiale Erstreckung um ein Vielfaches übersteigt. Dies ermöglicht axial kompakte Statoren und damit entsprechend kompakte Scheibenläufermotoren. Gleichzeitig führt insbesondere eine vergleichsweise große radiale Erstreckung des Spulenkerns und damit des Spulenelements zu einer entsprechend großen radialen Erstreckung des Polkörpers und damit der Polflächen, was ebenfalls leistungsstarke kompakte Motoren ermöglicht.

Vorzugsweise besteht der Spulenträger teilweise oder ganz aus magnetischem Material. Dadurch werden die magnetischen Feldstärken in der gewünschten Stärke ausgebildet, und das Magnetfeld der Spule wird in die gewünschten Richtungen gelenkt. In Betracht kommt selbstverständlich Metall, aber auch ein magnetischer Kunststoff (ein magnetisch leitender Kunststoff, d.h. ein mit magnetisch leitenden Metallpartikeln angereicherter Kunststoff) ist möglich. Bei Verwendung des magnetischen Kunststoffs lässt sich das Spulenelement und damit der Stator besonders kostengünstig herstellen, beispielsweise durch Spritzgießen.

Als zweckmäßig erweist es sich, die Rotoren und/oder den Stator im Spritzgussverfahren mit Einlegeteilen zu fertigen, da diese Art der Herstellung besonders kostengünstig ist.

Das erfindungsgemäße Elektrofahrrad oder Pedelec weist einen erfindungsgemäßen Scheibenläufermotor entsprechend den vorstehenden Ausführungen auf. Die Vorteile liegen hier insbesondere in den kompakten Abmessungen des Motors bei dennoch hoher Leistung, wodurch die Unterbringung des Motors erleichtert wird und insbesondere auch optisch ansprechende Lösungen ohne voluminöse Anbauten oder Rahmenvergrößerungen möglich sind.

Weiter ist vorgesehen, dass dieser Scheibenläufermotor zwischen einem Tretlager und einem Kettenblatt auf der Pedalachse des Elektrofahrrads oder Pedelecs angeordnet ist, wobei die Rotoren mit der Pedalachse derart verbunden sind, dass die Rotoren ein Drehmoment an die Pedalachse übertragen können, insbesondere über eine direkte Festverbindung oder Zahnverbindung, ohne Übersetzungsgewinde.

Diese Anordnung des Scheibenläufermotors hat den Vorteil, dass der Motor hinter dem Kettenblatt nicht oder zumindest kaum sichtbar ist. Der eigentliche Fahrradrahmen kann - zumindest hinsichtlich des Elektroantriebs - ohne wesentliche optische Veränderungen ausgebildet werden. Insbesondere der Bereich des Tretlagers muss nicht, wie bei bekannten Elektrofahrrädern, aufgrund der dortigen Anordnung des Motors deutlich vergrößert werden. Das Fahrrad behält damit die optische Erscheinung eines klassischen Fahrrads ohne Elektroantrieb. Von Vorteil ist auch die direkte Drehmomentübertragung ohne Übersetzungsgewinde. Auch dadurch wird der erforderliche Platzbedarf reduziert.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Dabei zeigen
- FIG 1: einen seitlichen Querschnitt entlang der Drehachse eines Ausführungsbeispiels eines Scheibenläufermotors gemäß der Erfindung,
- FIG 2: in Vergrößerung die obere Hälfte der FIG 1,
- FIG 3: einen der Rotoren des Scheibenläufermotors nach FIG 1 in Draufsicht auf die dem Stator zugewandte Stirnseite,
- FIG 4: in dreidimensionaler Darstellung eines der Spulenelemente des Stators des Scheibenläufermotors nach FIG 1,
- FIG 5: eine Draufsicht auf den Stator des Scheibenläufermotors nach FIG 1, und
- FIG 6: in einer schematischen Darstellung beispielhaft den Antriebsbereich eines erfindungsgemäßen Elektrofahrrads oder Pedelecs mit erfindungsgemäßem Scheibenläufermotor.

Einander entsprechende Teile und Komponenten sind in den Figuren mit den gleichen Bezugszeichen bezeichnet.

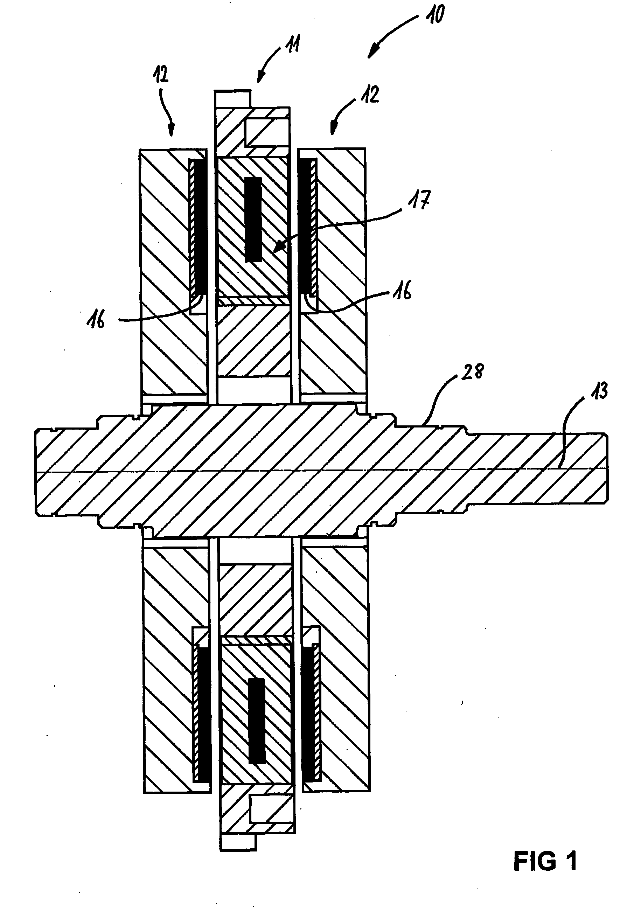

Der in FIG 1 bis FIG 5 dargestellt Scheibenläufermotor 10 weist einen Stator 11 auf, der zwischen zwei Rotoren 12 angeordnet ist. Der Stator 11 ist als Statorscheibe 11 ausgebildet. Die Rotoren 12 sind als Rotorscheiben 12 ausgebildet, wobei es sich bei den Rotorscheiben 12 um Läuferscheiben handelt, die gegenüber dem Stator 11 und gegebenenfalls auch einem nicht dargestellten Motorgehäuse um eine Drehachse 13 drehbar gelagert sind.

FIG 1 zeigt, dass Rotorscheibe 12 und Statorscheibe 11 senkrecht zur Drehachse 13 ausgerichtet sind und parallel zueinander orientiert sind. Sie sind entlang der Drehachse 13 angeordnet. Die Statorscheibe 11 ist von beiden Rotorscheiben 12 durch einen Spalt 14 beabstandet.

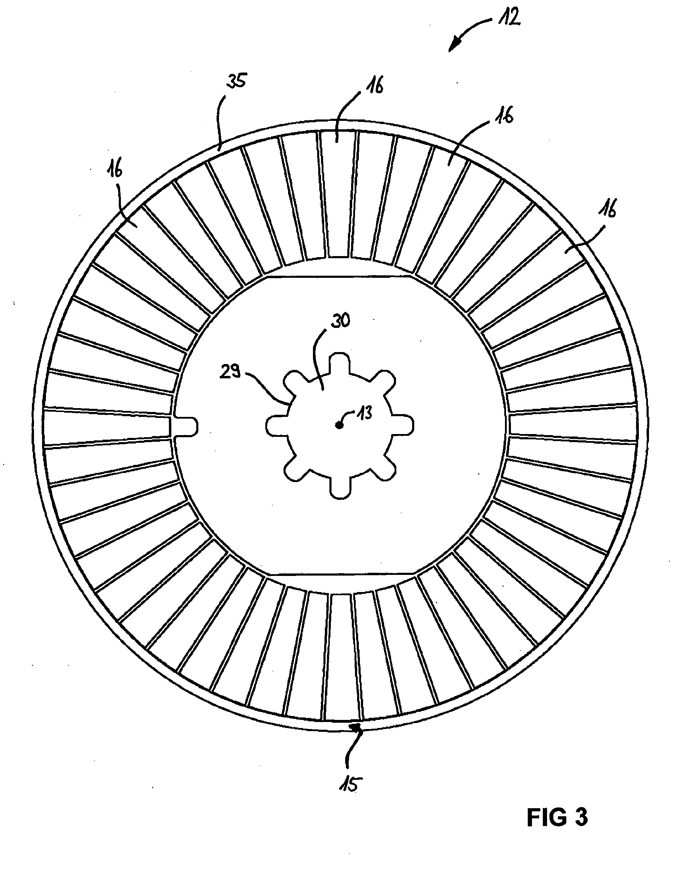

Beide Rotoren 12 sind über eine Verzahnung an einer Innenausnehmung 30 (siehe FIG 3) mit einer Antriebsachse 28, beispielsweise einer Pedalachse 28, drehfest verbunden, d.h. sie können ein Drehmoment an die Antriebsachse 28 übertragen. Beide Rotoren 12 übertragen ihr Drehmoment auf eine gemeinsame Antriebsachse 28. Beide Rotoren 12 drehen sich gemeinsam mit der Antriebsachse 28, die sich ebenfalls um die gemeinsame Drehachse 13 dreht.

Die Statorscheibe 11 weist ebenfalls eine Innenausnehmung 31 auf, die keine Verzahnung und einen etwas größeren Durchmesser als die Innenausnehmung 30 der Rotorscheibe 12 aufweist. Somit umgreift die Statorscheibe 11 die durch ihre Innenausnehmung 31 hindurchgehende Antriebsachse 28, ohne mit dieser in Wirkverbindung zu stehen, d.h. die Antriebsachse 28 ist gegenüber der Statorscheibe 11 drehbar. Auch beliebige andere Anordnungen, die eine Drehbarkeit der Antriebsachse 28 gegenüber der Statorscheibe 11 ermöglichen, können vorgesehen werden, beispielsweise Kugellager.

Eine der Statorscheibe 11 zugewandte Stirnseite 15 beider Rotoren 12 weist eine Vielzahl an in axialer Richtung gepolten Permanentmagneten 16 auf. Diese sind ringförmig um die Drehachse 13 angeordnet (siehe FIG 3), wobei in tangentialer Richtung abwechselnd ein Nord- und ein Südpol dem Stator 11 zugewandt ist.

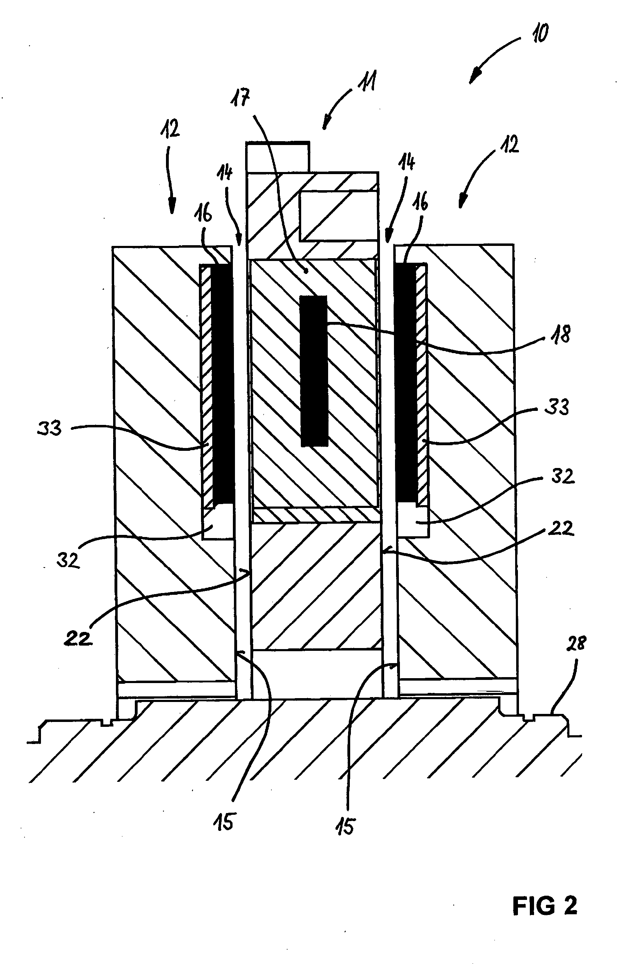

FIG 2 zeigt, dass die Permanentmagnete 16 in eine Ausnehmung 32 in einem Grundkörper 35 der Rotorscheibe 12 eingesetzt sind, so dass die dem Stator 11 zugewandte Fläche der Permanentmagneten 16 mit der restlichen Rotorscheibe 12 eine ebene Stirnseite 15 ausbildet. Auf der dem Stator 11 abgewandten Rückseite der Permanentmagnete 16 ist in der Ausnehmung 32 ein magnetisches Rückschlussblech 33 angeordnet, das sich ringförmig um die Drehachse 13 umlaufend und durchgehend über die Rückseite aller Permanentmagnete 16 erstreckt. Der Grundkörper 35 der Rotorscheibe 12, in den die Permanentmagnete 16 und gegebenenfalls die Rückschlussbleche 33 eingesetzt werden, kann ein Kunststoffkörper sein.

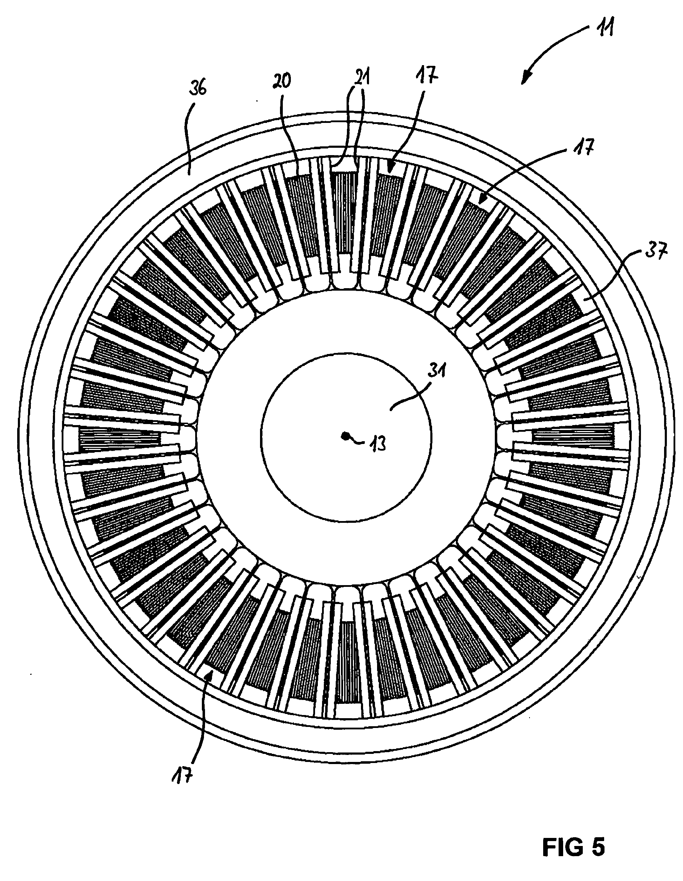

Der Stator 11 weist eine Vielzahl an Spulenelementen 17 auf, die mit Abstand zueinander ringförmig um die Drehachse 13 des Rotors 12 angeordnet sind (siehe FIG 5). Die Spulenelemente 17 sind derart angeordnet, dass ihre jeweilige Spulenachse, d.h. die Mittellinie durch die Spulenwicklung, tangential um die Drehachse 13 des Rotors 12 ausgerichtet ist. Alle Spulenachsen der ringförmig angeordneten Spulenelemente 17 sind somit Tangenten an einen Kreis um die Drehachse 13 des Rotors 12. Die Spulenelemente 17 sind in einem Grundkörper 36 der Statorscheibe 11 angeordnet, der beispielsweise ein Kunststoffkörper sein kann. Die Wicklungen aus Spulendraht 20 der Spulenelemente 17 sind durch einen Kunststoffverguss 37 verschlossen, so dass die Wicklung in das Innere der Statorscheibe eingebettet ist. Auch der Abstand zwischen den Spulenelementen 17 kann in diesen Kunststoffverguss 37 eingebettet sein.

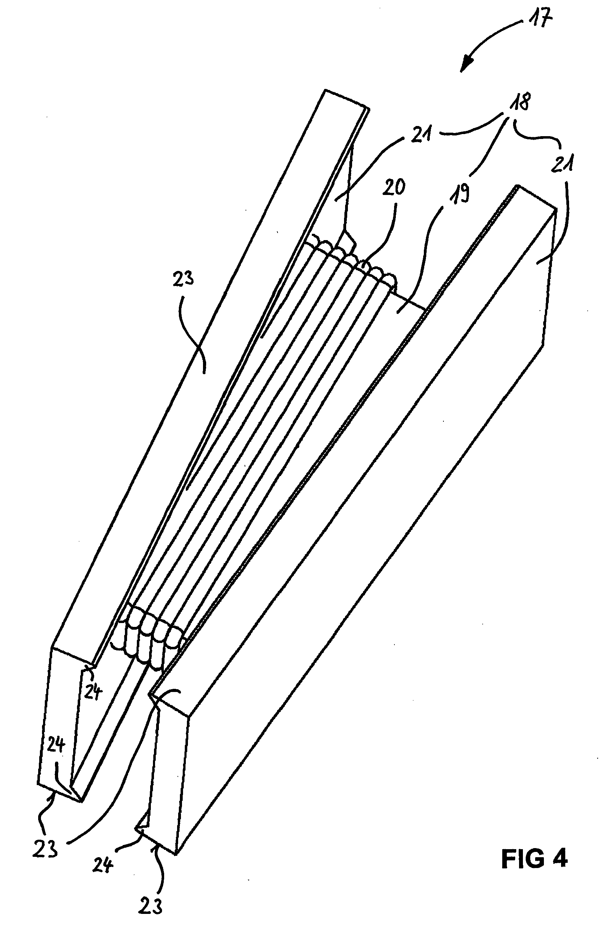

Ein einzelnes Spulenelement 17 ist in FIG 4 gezeigt. Es weist einen Spulenträger 18 auf. Dieser umfasst einen Spulenkern 19, um den ein Spulendraht 20 gewickelt ist. Der Spulenkern 19 ist ein Flachkörper, dessen radiale und tangentiale Erstreckung bezogen auf die Drehachse 13 des Rotors 12 (in FIG 4 nicht dargestellt, die Ausrichtung der Spulenelemente ist aus FIG 5 ersichtlich) seine axiale Erstreckung um ein Vielfaches übersteigt. Mit anderen Worten: Der Spulenkern 19 ist ein flacher Materialstreifen. Er ist in der axialen Mitte der Statorscheibe 11 angeordnet und parallel zu dieser ausgerichtet.

FIG 4 zeigt weiter, dass der Spulenkern 19 an seinen entlang der Spulenachse, die durch den Spulenkern 19 verläuft, und zwar in der Mitte der Wicklung aus Spulendraht 20, gegenüberliegenden Enden zwei einander gegenüberliegende Polkörper 21 aufweist. Die Polkörper 21 erstrecken sich in axialer und in radialer Richtung bezogen auf die Drehachse 13 des Rotors 12 (in FIG 4 nicht dargestellt, die Ausrichtung der Spulenelemente ist aus FIG 5 ersichtlich) beidseitig über den Spulenkern 19 hinaus. Mit anderen Worten: Beide Polkörper 21 eines Spulenelements 17 stehen in einer Ebene senkrecht zur Spulenachse allseitig über den Spulenkern hervor. Der Spulendraht 20 kann somit nicht vom Spulenkern 19 rutschen.

Aus FIG 4 und FIG 5 ist weiter ersichtlich, dass beide Polkörper 21 des Spulenelements 17 jeweils Polflächen 23 ausbilden, die an beiden den Rotoren 12 zugewandten, einander gegenüberliegenden Stirnseiten 22 des Stators 11 den Permanentmagneten 16 des jeweiligen Rotors 12 gegenüber liegen. Die Polflächen 23 bilden mit der restlichen Statorscheibe 11 eine ebene Stirnseite 22 aus. Die Polkörper 21 erstrecken sich in axialer Richtung bezogen auf die Drehachse 13 des Rotors 12 zwischen den einander gegenüber liegenden Polflächen 23, durch die gesamte Statorscheibe 11 hindurch.

Aus FIG 4 ist weiter ersichtlich, dass die Polflächen 23 an einer bezogen auf die Drehachse 13 des Rotors 12 tangentialen Verbreiterung 24 des Polkörpers 21 ausgebildet sind. Diese Verbreiterung 24 ist in Richtung auf den jeweils anderen Polkörper 21 desselben Spulenelements 17 ausgebildet, d.h. die Verbreiterung 24 erstreckt sich zumindest über einen Teil der Wicklung aus Spulendraht 20.

FIG 5 zeigt, dass die Polkörper 21 bezogen auf die Drehachse 13 des Rotors 12 radial ausgerichtet sind, so dass sich der Abstand der beiden Polkörper 21 des Spulenelements 17 und damit auch die tangentiale Erstreckung des Spulenelements 17 mit zunehmendem radialen Abstand von der Drehachse 13 des Rotors 12 vergrößern. Dies ist auch in FIG 4 deutlich zu erkennen.

Die einzelnen Spulenelemente 17 des Stators 11 werden derart elektrisch angesteuert, dass die entstehenden Magnetfelder über die Polflächen 23 der Polkörper 21 mit den Permanentmagneten 16 der Rotoren 12 dahingehend wechselwirken, dass die Rotoren 12 gegenüber dem Stator 11 zum Rotieren angetrieben werden.

Der Spulenträger 18 kann vollständig, aber auch nur teilweise aus magnetischem Kunststoff oder aus magnetischem Metall bestehen.

Die Herstellung der Rotoren 12 und Statoren 11 kann derart erfolgen, dass diese im Spritzgussverfahren mit Einlegeteilen gefertigt sind, d.h. die Spulenelemente 17 bzw. die Permananentmagnete 16 sowie gegebenenfalls jeweils weitere Teile, beispielsweise die Rückschlussbleche 33, werden in dem jeweiligen Formholraum einer Spritzgießmaschine positioniert. Anschließend wird Kunststoff eingespritzt. Nach dem Aushärten sind die jeweiligen Teile in der gewünschten Position in der Statorscheibe 11 bzw. der Rotorscheiben 12 eingebettet.

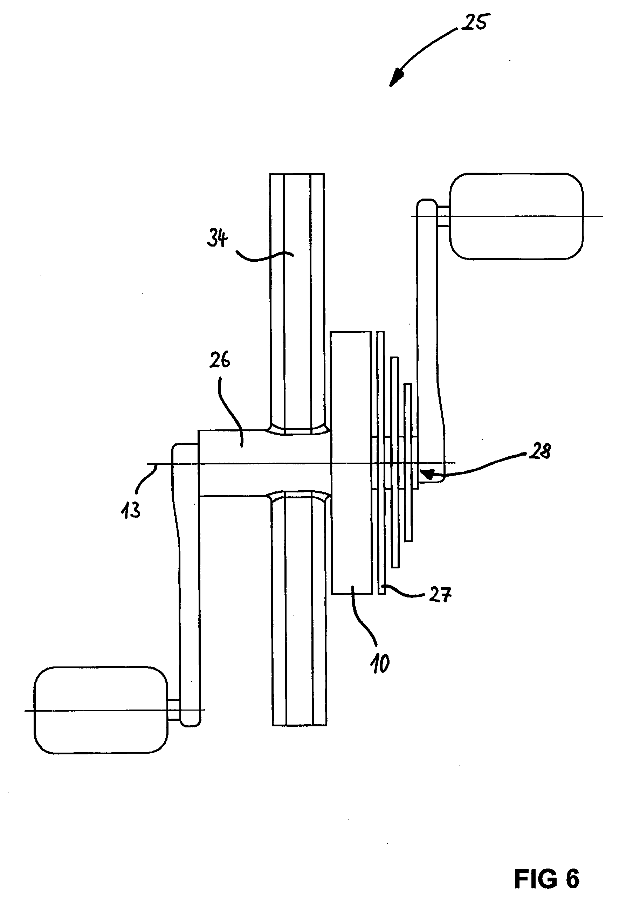

FIG 6 zeigt in einer schematischen Darstellung beispielhaft den Antriebsbereich eines Elektrofahrrads 25 oder Pedelecs 25. Der Antrieb weist einen erfindungsgemäßen Scheibenläufermotor 10 auf. Dieser ist zwischen einem Tretlager 26 und einem Kettenblatt 27 auf der Pedalachse 28 des Elektrofahrrads 25 oder Pedelecs 25 angeordnet ist. An das Tretlager 26 schließt sich ein Rahmen 34 des Elektrofahrrads 25 bzw. Pedelecs 25 an, bzw. das Tretlagergehäuse ist Teil des Rahmens 34. Das dargestellte Ausführungsbeispiel weist neben dem bereits genannten Kettenblatt 27 zwei weitere Kettenblätter auf.

Zu erkennen ist deutlich, dass die radialen Abmessungen des Scheibenläufermotors 10 denen des Kettenblattes 27 entsprechen, sowie dass der axiale Durchmesser des Scheibenläufermotors 10 in etwa der axialen Erstreckung der Kettenblatteinheit mit den drei Kettenblättern entspricht. Somit ist der Scheibenläufermotor 10 für einen Betrachter des Elektrofahrrads 25 bzw. Pedelecs 25 kaum zu erkennen, der Scheibenläufermotor 10 führt nicht zu einem unansehnlich oder klobig wirkenden Fahrrad.

Nicht zu erkennen ist in FIG 6, dass der oder die Rotoren 12 des Scheibenläufermotors 10 mit der Pedalachse 28 derart verbunden sind, dass der oder die Rotoren 12 ein Drehmoment an die Pedalachse 28 übertragen können, insbesondere über eine direkte Festverbindung oder Zahnverbindung, ohne Übersetzungsgewinde. Bei dem Scheibenläufermotor 10 kann es sich um den in FIG 1 bis FIG 5 ohne Gehäuse dargestellten Scheibenläufermotor 10 handeln.

### Bezugszeichenliste

- 10: Scheibenläufermotor
- 11: Stator, Statorscheibe
- 12: Rotor, Rotorscheibe
- 13: Drehachse
- 14: Spalt
- 15: Stirnseite des Rotors
- 16: Permanentmagnet
- 17: Spulenelement
- 18: Spulenträger
- 19: Spulenkern
- 20: Spulendraht
- 21: Polkörper
- 22: Stirnseite des Stators
- 23: Polflächen
- 24: Verbreiterung
- 25: Elektrofahrrad, Pedelec
- 26: Tretlager
- 27: Kettenblatt
- 28: Antriebsachse, Pedalachse
- 29: Verzahnung
- 30: Innenausnehmung der Rotorscheibe 12
- 31: Innenausnehmung der Statorscheibe 11
- 32: Ausnehmung der Rotorscheibe 12
- 33: Magnetisches Rückschlussblech
- 34: Rahmen
- 35: Grundkörper der Rotorscheibe 12
- 36: Grundkörper der Statorscheibe 11
- 37: Kunststoffverguss

## Patentansprüche

1. Elektrischer Scheibenläufermotor (10) für ein Elektrofahrrad (25) oder Pedelec (25),
mit mindestens einem als Scheibe ausgebildeten Stator (11),
mit mindestens einem als Läuferscheibe ausgebildeten Rotor (12), der gegenüber dem Stator (11) und/oder einem Motorgehäuse um eine Drehachse (13) drehbar gelagert ist,
wobei Rotor (12) und Stator (11) parallel zueinander orientiert und durch einen Spalt (14) voneinander beabstandet sind,
wobei eine dem Stator (11) zugewandte Stirnseite (15) des Rotors (12) eine Vielzahl an in axialer Richtung gepolten Permanentmagneten (16) aufweist, die ringförmig um die Drehachse (13) angeordnet sind, wobei in tangentialer Richtung abwechselnd ein Nord- und ein Südpol dem Stator (11) zugewandt ist,
wobei der Stator (11) eine Vielzahl an Spulenelementen (17) aufweist, die ringförmig um die Drehachse (13) des Rotors (12) angeordnet sind, wobei der mindestens eine Stator (11) zwischen zwei Rotoren (12) angeordnet ist, die um eine gemeinsame Drehachse (13) drehbar gelagert sind,
wobei die Spulenelemente (17) des Stators (11) derart angeordnet sind, dass ihre jeweilige Spulenachse tangential um die gemeinsame Drehachse (13) ausgerichtet ist,
wobei die Spulenelemente (17) jeweils einen Spulenträger (18) aufweisen mit einem Spulenkern (19), um den ein Spulendraht (20) gewickelt ist, wobei der Spulenkern (19) an seinen entlang der Spulenachse gegenüberliegenden Enden zwei einander gegenüberliegende Polkörper (21) aufweist, die sich in axialer und/oder in radialer Richtung bezogen auf die Drehachse (13) des Rotors (12) beidseitig über den Spulenkern (19) hinausgehend erstrecken, und
wobei beide Polkörper (21) jedes Spulenelements (17) jeweils an beiden den Rotoren (12) zugewandten, einander gegenüberliegenden Stirnseiten (22) des Stators (11) den Permanentmagneten (16) des jeweiligen Rotors (12) zumindest abschnittsweise gegenüberliegende Polflächen (23) ausbilden,
**dadurch gekennzeichnet,**
**dass** die Polkörper (21) bezogen auf die Drehachse (13) des Rotors (12) radial ausgerichtet sind, so dass sich der Abstand der beiden Polkörper (21) eines Spulenelements (17) mit zunehmendem radialen Abstand von der Drehachse (13) des Rotors (12) vergrößert, und
**dass** der Spulenkern (19) ein Flachkörper ist, dessen radiale Erstreckung bezogen auf die Drehachse (13) des Rotors (12) seine axiale Erstreckung um ein Vielfaches übersteigt.

2. Scheibenläufermotor (10) nach Anspruch 1,
**dadurch gekennzeichnet, dass**
die Polflächen (23) an einer bezogen auf die Drehachse (13) des Rotors (12) tangentialen Verbreiterung (24) des Polkörpers (21) ausgebildet sind

3. Scheibenläufermotor (10) nach Anspruch 2,
**dadurch gekennzeichnet, dass**
die tangentialen Verbreiterung (24) des Polkörpers (21) eine Verbreiterung (24) in Richtung auf den jeweils anderen Polkörper (21) desselben Spulenelements (17) umfasst.

4. Scheibenläufermotor (10) nach einem der Ansprüche 1 bis 3,
**dadurch gekennzeichnet, dass**
die Polkörper (21) bezogen auf die Drehachse (13) des Rotors (12) radial ausgerichtet sind, so dass sich die tangentiale Erstreckung des Spulenelements (17) mit zunehmendem radialen Abstand von der Drehachse (13) des Rotors (12) vergrößert.

5. Scheibenläufermotor (10) nach einem der Ansprüche 1 bis 4,
**dadurch gekennzeichnet, dass**
der Spulenkern (19) ein Flachkörper ist, dessen tangentiale Erstreckung bezogen auf die Drehachse (13) des Rotors (12) seine axiale Erstreckung um ein Vielfaches übersteigt.

6. Scheibenläufermotor (10) nach einem der Ansprüche 1 bis 5,
dadurch gekenntzeichnet, dass
die Spulenträger (18) teilweise oder ganz aus magnetischem Kunststoff und/oder aus Metall bestehen.

7. Scheibenläufermotor (10) nach einem der Ansprüche 1 bis 6,
**dadurch gekennzeichnet, dass**
die Rotoren (12) und/oder der Stator (11) im Spritzgussverfahren mit Einlegeteilen gefertigt sind.

8. Elektrofahrrad (25) oder Pedelec (25) mit einem Scheibenfäufermotor (10) nach einem der Ansprüche 1 bis 7,
**dadurch gekennzeichnet, dass**
der Scheibenläufermotor (10) zwischen einem Tretlager (26) und einem Kettenblatt (27) auf der Pedalachse (28) des Elektrofahrrads (25) oder Pedelecs (25) angeordnet ist, wobei die Rotoren (12) mit der Pedalachse (28) derart verbunden sind, dass die Rotoren (12) ein Drehmoment an die Pedalachse (28) übertragen können.

9. Elektrofahrrad (25) oder Pedelec (25) nach Anspruch 8,
**dadurch gekennzeichnet, dass**
die Übertragung des Drehmoments von den Rotoren (12) an die Pedalachse (28) über eine direkte Festverbindung oder Zahnverbindung, ohne Übersetzungsgewinde erfolgt.

## Claims

1. Electric disk-armature motor (10) for an electric bicycle (25) or pedelec (25),
comprising at least one stator (11) in the form of a disk,
comprising at least one rotor (12) in the form of an armature disk which is mounted rotatably about an axis of rotation (13) with respect to the stator (11) and/or a motor housing,
wherein the rotor (12) and the stator (11) are oriented parallel to one another and are spaced apart from one another by a gap (14), wherein an end side (15) of the rotor (12), which end side faces the stator (11), has a multiplicity of permanent magnets (16) polarized in the axial direction, which permanent magnets are arranged in the form of a ring around the axis of rotation (13), wherein a north pole and a south pole faces the stator (11) alternately in the tangential direction, wherein the stator (11) has a multiplicity of coil elements (17), which are arranged in the form of a ring around the axis of rotation (13) of the rotor (12),
wherein the at least one stator (11) is arranged between two rotors (12), which are mounted rotatably about a common axis of rotation (13),
wherein the coil elements (17) of the stator (11) are arranged in such a way that their respective coil axis is aligned tangentially about the common axis of rotation (13),
wherein the coil elements (17) each have a coil former (18) with a coil core (19) around which a coil wire (20) is wound, wherein the coil core (19) has, at its opposite ends along the coil axis, two mutually opposite pole bodies (21), which extend in the axial and/or radial direction in relation to the axis of rotation (13) of the rotor (12) on both sides beyond the coil core (19), and
wherein both pole bodies (21) of each coil element (17) each form pole faces (23), which, on both mutually opposite end sides (22) of the stator (11) which face the rotors (12), are at least sectionally opposite the permanent magnets (16) of the respective rotor (12), **characterized**
**in that** the pole bodies (21) are aligned radially in relation to the axis of rotation (13) of the rotor (12), with the result that the distance between the two pole bodies (21) of a coil element (17) increases as the radial distance from the axis of rotation (13) of the rotor (12) increases, and in that the coil core (19) is a flat body, whose radial extent in relation to the axis of rotation (13) of the rotor (12) exceeds its axial extent by a multiple.

2. Disk-armature motor (10) according to Claim 1,
**characterized in that**
the pole faces (23) are formed on a widened portion (24) of the pole body (21), which widened portion is tangential in relation to the axis of rotation (13) of the rotor (12).

3. Disk-armature motor (10) according to Claim 2,
**characterized in that**
the tangential widened portion (24) of the pole body (21) comprises a widened portion (24) in the direction of the respective other pole body (21) of the same coil element (17).

4. Disk-armature motor (10) according to one of Claims 1 to 3,
**characterized in that**
the pole bodies (21) are aligned radially in relation to the axis of rotation (13) of the rotor (12), with the result that the tangential extent of the coil element (17) increases as the radial distance from the axis of rotation (13) of the rotor (12) increases.

5. Disk-armature motor (10) according to one of Claims 1 to 4,
**characterized in that**
the coil core (19) is a flat body, whose tangential extent in relation to the axis of rotation (13) of the rotor (12) exceeds its axial extent by a multiple.

6. Disk-armature motor (10) according to one of Claims 1 to 5,
**characterized in that**
the coil formers (18) consist partially or entirely of a magnetic polymer and/or of metal.

7. Disk-armature motor (10) according to one of Claims 1 to 6,
**characterized in that**
the rotors (12) and/or the stator (11) are manufactured in an injection molding process with inserts.

8. Electric bicycle (25) or pedelec (25) comprising a disk-armature motor (10) according to one of Claims 1 to 7,
**characterized in that**
the disk-armature motor (10) is arranged between a bottom bracket (26) and a chainring (27) on the pedal spindle (28) of the electric bicycle (25) or pedelec (25), wherein the rotors (12) are connected to the pedal spindle (28) in such a way that the rotors (12) can transmit a torque to the pedal spindle (28).

9. Electric bicycle (25) or pedelec (25) according to Claim 8,
**characterized in that**
the transmission of the torque from the rotors (12) to the pedal spindle (28) is performed via a direct fixed connection or toothed connection, without a transmission thread.

## Revendications

1. Moteur électrique à rotor à disque (10) pour un vélo électrique (25) ou pédélec (25),
avec au moins un stator (11) en forme de disque,
avec au moins un rotor (12) conçu comme un disque, qui est logé de manière rotative par rapport au stator (11) et/ou à un boîtier de moteur autour d'un axe de rotation (13),
le rotor (12) et le stator (11) étant parallèles l'un à l'autre et écartés l'un de l'autre par un interstice (14),
une face frontale (15) du rotor (12), orientée vers le stator (11), comprenant une pluralité d'aimants permanents (16) avec des pôles dans la direction axiale, qui sont disposés de manière annulaire autour de l'axe de rotation (13), un pôle nord et un pôle sud étant orientés en alternance vers le stator (11) dans la direction tangentielle,
le stator (11) comprenant une pluralité d'éléments de bobines (17), qui sont disposés de manière annulaire autour de l'axe de rotation (13) du rotor (12),
l'au moins un stator (11) étant disposé entre deux rotors (12) logés de manière rotative autour d'un axe de rotation (13) commun,
les éléments de bobines (17) du stator (11) étant disposés de façon à ce que leur axe de bobine correspondant sont orienté de manière tangentielle autour de l'axe de rotation (13) commun,
les éléments de bobines (17) comprenant chacun un support de bobine (18) avec un noyau de bobine (19) autour duquel est enroulé un fil de bobine (20),
le noyau de bobine (19) comprenant, au niveau de ses extrémités opposées le long de l'axe de bobine, deux corps polaires (21) disposés l'un en face de l'autre, qui s'étendent dans la direction axiale et/ou radiale par rapport à l'axe de rotation (13) du rotor (12) de deux côtés, tout en s'étendant au-delà du noyau de bobine (19), et
les deux corps polaires (21) de chaque élément de bobine (17) formant chacun, au niveau des faces frontales (22), opposées et orientées vers le rotor (12), du stator (11), les faces polaires (23) au moins partiellement opposées des aimants permanents (16) du rotor (12) correspondant,
**caractérisé en ce que**
les corps polaires (21) sont orientés radialement par rapport à l'axe de rotation (13) du rotor (12), de façon à ce que la distance entre les deux corps polaires (21) d'un élément de bobine (17) augmente en même temps que la distance radiale par rapport à l'axe de rotation (13) du rotor (12), et
**en ce que** le noyau de bobine (19) est un corps plat dont l'extension radiale par rapport à l'axe de rotation (13) du rotor (12) représente un multiple de son extension radiale.

2. Moteur à rotor à disque (10) selon la revendication 1, **caractérisé en ce que** les faces polaires (23) sont formées au niveau d'un élargissement (24) du corps polaire (21) tangentiel par rapport à l'axe de rotation (13) du rotor (12).

3. Moteur à rotor à disque (10) selon la revendication 2, **caractérisé en ce que** l'élargissement tangentiel (24) du corps polaire (21) comprend un élargissement (24) en direction de l'autre corps polaire (21) de ce même élément de bobine (17).

4. Moteur à rotor à disque (10) selon l'une des revendications 1 à 3, **caractérisé en ce que** les corps polaires (21) sont orientés radialement par rapport à l'axe de rotation (13) du rotor (12), de façon à ce que l'extension tangentielle de l'élément de bobine (17) augmente en même temps que la distance radiale par rapport à l'axe de rotation (13) du rotor (12).

5. Moteur à rotor à disque (10) selon l'une des revendications 1 à 4, **caractérisé en ce que** le noyau de bobine (19) est un corps plat dont l'extension tangentielle par rapport à l'axe de rotation (13) du rotor (12) représente un multiple de son extension axiale.

6. Moteur à rotor à disque (10) selon l'une des revendications 1 à 5, **caractérisé en ce que** le support de bobine (18) est constitué partiellement ou entièrement d'une matière plastique magnétique et/ou de métal.

7. Moteur à rotor à disque (10) selon l'une des revendications 1 à 6, **caractérisé en ce que** les rotors (12) et/ou le stator (11) sont fabriqués à l'aide d'un procédé d'injection avec des inserts.

8. Vélo électrique (25) ou pédélec (25) avec un moteur à rotor à disque (10) selon l'une des revendications 1 à 7, **caractérisé en ce que** le moteur à rotor à disque (10) est disposé entre un pédalier (26) et un plateau (27) sur l'axe des pédales (28) du vélo électrique (25) ou pédélec (25), les rotors (12) étant reliés à l'axe des pédales (28) de façon à ce que les rotors (12) puissent transmettre un couple à l'axe des pédales (28).

9. Vélo électrique (25) ou pédélec (25) selon la revendication 8, **caractérisé en ce qu'**une transmission du couple des rotors (12) à l'axe des pédales (28) a lieu par l'intermédiaire d'une liaison fixe ou d'une liaison dentée directe sans filetage de démultiplication.
